(19) Europäisches Patentamt
European Patent Office
Office européen des brevets

(11) **EP 1 180 393 B1**

(12) **FASCICULE DE BREVET EUROPEEN**

(45) Date de publication et mention
de la délivrance du brevet:
**11.03.2009 Bulletin 2009/11**

(51) Int Cl.:
*B01J 8/02* (2006.01)     *B01J 8/04* (2006.01)
*B01F 3/04* (2006.01)     *B01F 3/08* (2006.01)

(21) Numéro de dépôt: **01402129.9**

(22) Date de dépôt: **07.08.2001**

(54) **Réacteur avec dispositif de mélange.**

Reaktor mit Mischanlage

Reactor with mixing device

(84) Etats contractants désignés:
**DE ES IT NL**

(30) Priorité: **17.08.2000 FR 0010694**

(43) Date de publication de la demande:
**20.02.2002 Bulletin 2002/08**

(73) Titulaire: **Institut Français du Pétrole**
**92852 Rueil-Malmaison Cedex (FR)**

(72) Inventeurs:
• **Boyer, Christophe**
**69390 Charly (FR)**

• **Coupard, Vincent**
**69120 Vaulx-en-Velin (FR)**
• **Fanget, Bertrand**
**38200 Vienne (FR)**

(56) Documents cités:
**EP-A- 0 442 164**     **EP-A- 0 674 249**
**DE-C- 687 952**       **FR-A- 2 740 054**
**US-A- 3 946 104**     **US-A- 5 885 534**
**US-A- 5 997 826**     **US-A- 6 017 022**

**Description**

La présente invention concerne un réacteur comprenant un dispositif permettant d'optimiser le mélange et la distribution de deux fluides constitués pour le premier d'une phase essentiellement gazeuse comprenant le plus souvent au moins en partie de l'hydrogène et pour le second d'une phase liquide essentiellement composée d'hydrocarbures, ledit dispositif étant placé en amont d'un lit granulaire ou entre deux lits granulaires comportant des particules solides, les solides granulaires présentant avantageusement une activité catalytique. De façon préférée, lesdits systèmes de mélange et de distribution sont intégrés dans un réacteur à lit fixe et l'écoulement des phases liquides et gazeuses est à co-courant descendant à travers le ou lesdits lits de solides granulaires.

On parlera indifféremment dans la suite de la présente description de systèmes ou de dispositifs de mélange et de distribution.

Ces systèmes peuvent être placés de manière générale en amont d'un lit granulaire et de façon plus particulière en tête d'un réacteur.

La présente invention trouve en particulier une application dans tous les cas :

où la phase gazeuse est largement majoritaire par rapport à la phase liquide c'est-à-dire où le rapport volumique entre le gaz et le liquide est souvent supérieur à 3 : 1 et habituellement inférieur à $400 : 1 \left(3 < \dfrac{Gaz\ vol}{Liquide\ vol} < 400\right),$

où la phase gazeuse est minoritaire par rapport à la phase liquide c'est-à-dire où le rapport volumique entre le gaz et le liquide est souvent supérieur à 0.1 : 1 et habituellement inférieur à

$$1 : 1 \left(0.1 < \frac{Gaz\ vol}{Liquide\ vol} < 1\right),$$

où la réaction est fortement exothermique et nécessite l'introduction dans le réacteur d'un fluide, qui est souvent un gaz, supplémentaire pour refroidir le mélange gaz/liquide,

où la réaction nécessite un contact étroit pour permettre la dissolution d'un composé le plus souvent gazeux (par exemple de l'hydrogène $H_2$) dans la phase liquide.

La présente invention s'applique en particulier dans le domaine des distributeurs gaz/liquide comme par exemple ceux employés pour la mise en oeuvre des réactions d'hydrocraquage, d'hydrotraitement, d'hydrodésulfuration, d'hydrodéazotation, d'hydrogénations sélectives ou totales des coupes $C_2$ à $C_5$, l'hydrogénation sélective des essences de vapocraquage, l'hydrogénation des composés aromatiques dans des coupes aliphatiques et/ou naphténiques, l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Dans le domaine spécifique des réactions d'hydrodésulfuration, d'hydrodéazotation, d'hydrocraquage pour atteindre des conversions poussées (pour obtenir un produit contenant par exemple 30 ppm (parties par million) de soufre ou moins) il est nécessaire d'avoir une bonne distribution du gaz et du liquide mais principalement du liquide sachant que l'on se situe avec des rapports volumétriques qui varient en général d'environ 3 : 1 à environ 400 : 1 et le plus souvent d'environ 10 : 1 à environ 200 : 1 et dans le cas de l'utilisation d'un Quench un très bon contact entre le gaz introduit pour effectuer le refroidissement et les fluides du procédé mis en oeuvre souvent dénommés fluides process.

De façon à optimiser la distribution d'un fluide composé en général d'au moins une phase gazeuse et d'au moins une phase liquide, une solution proposée dans l'art antérieur consiste en des systèmes de distribution gaz/liquide à injection mixte pour des écoulements descendants.

Le brevet FR 2 745 202 et le brevet US 5,688,445 proposent ainsi un plateau à cheminées munies de trous étagés le long de la cheminée pour le passage du gaz (trous supérieurs) et du liquide (trous inférieurs). Aucun système n'est prévu dans cet art antérieur pour empêcher les fluctuations de l'interface liquide/gaz au-dessus du plateau dues à l'injection du liquide en tête du réacteur. En effet du fait de leur configuration, un déséquilibre de cette interface entraîne un déséquilibre des flux gaz et liquide d'une cheminée à l'autre.

Le brevet WO95/35159 propose un système de distribution à deux niveaux, le deuxième niveau est constitué d'un plateau à cheminées qui sont percées de trous dans leur partie située en dessus du plateau et dans leur partie située en dessous du plateau. L'inconvénient de ce plateau vient du fait que la flexibilité vis à vis du débit liquide est obtenue en mettant en oeuvre deux types de cheminées. En fonction du débit liquide la densité des points d'injection est donc variable. De plus, la mise en place de deux niveaux impose une hauteur importante en tête du réacteur.

Le brevet US 4,140,625 propose un système de plateau traversé par des venturis. Le gaz est injecté en tête de ces venturis et le liquide est injecté au niveau du col ou à l'amont du convergent. Le mélange gaz/liquide est alors injecté dans le lit catalytique. Ce système a l'inconvénient de n'offrir qu'une faible flexibilité en débit liquide puisqu'il n'y a qu'un seul niveau de trous pour le liquide.

Le brevet FR-A- 2 740 054 propose une chambre de mélange munie d'orifices d'injection et/ou de soutirage pour optimiser la fonction de mélange. En résumé on peut conclure que parmi les systèmes proposés dans ces différents brevets et mettant en oeuvre un plateau à injection mixte des phases liquide et gaz :

• Soit le plateau offre une grande flexibilité en débit liquide mais ne dispose d'aucun moyen pour stabiliser l'interface gaz/liquide en amont du plateau.
• Soit le plateau dispose de deux niveaux pour amortir les fluctuations de l'interface gaz/liquide mais n'offre qu'une faible flexibilité en débit liquide.

Contrairement à la présente invention, dans le cadre des systèmes à injection gaz/liquide en écoulement descendant, les systèmes décrits dans l'art antérieur sont exclusivement alimentés par un écoulement gaz/liquide en entrée de réacteur. Le système selon l'invention présente ainsi une solution alternative et innovante aux problèmes liés aux dispositifs de l'art antérieur. Ainsi, la présente invention permet une grande flexibilité au niveau du débit liquide, et l'absence de fluctuations au niveau de l'interface gaz/liquide

La présente invention a pour objet un réacteur comprenant un dispositif permettant de réaliser un mélange polyphasique de deux fluides et leur distribution comportant une chambre dédiée au passage d'un premier fluide, ladite chambre étant percée de tubes ou cheminées perforés servant au passage à travers la chambre d'un deuxième fluide dans un état physique différent du premier ou non miscible avec le premier, lesdits tubes étant percées par au moins un orifice permettant le passage du premier fluide et le mélange des deux fluides à travers les tubes, ledit second fluide étant injecté en amont dudit dispositif et l'injection du premier fluide étant effectuée au niveau dudit dispositif, et d'autres éléments tels que décrits dans le libellé de la revendication indépendante 1. En général, le premier fluide est essentiellement liquide et le deuxième fluide est essentiellement gazeux.

Avantageusement, le dispositif est placé à proximité de la tête d'un réacteur.

Préférentiellement, ladite chambre est alimentée en au moins un point par l'injection du premier fluide latéralement par rapport audit dispositif.

En général, le deuxième fluide est injecté axialement en aval dudit dispositif.

Selon une réalisation particulière, les tubes sont prolongés d'une distance $h_t$ en dessous de la chambre

L'invention concerne également un réacteur de forme allongé selon un axe comprenant au moins un dispositif selon l'invention permettant de réaliser le mélange et la distribution de deux fluides dans des états physiques différents, comprenant au moins un lit de solides granulaires en aval d'au moins un dispositif de mélange et de distribution et deux lignes réparées d'injection des fluides dans ledit dispositif, l'injection du premier desdits fluide dans ledit dispositif étant effectuée au niveau dudit dispositif, habituellement sensiblement perpendiculairement par rapport à l'axe du réacteur et l'injection du second fluide dans ledit dispositif étant effectuée en amont dudit dispositif, habituellement sensiblement selon la direction de l'axe du réacteur.

Selon un mode préféré de réalisation, les phases liquides et gazeuses circulent en écoulement co-courant et descendant à travers le ou lesdits lits de solides granulaires.

Plus particulièrement, la charge liquide et la phase gazeuse peuvent être injectées en amont dudit ou desdits lits de solides granulaires.

Avantageusement, le ou lesdits lits de solides granulaires comportent au moins un solide granulaire catalytique.

Dans un exemple de réalisation, le premier fluide est une phase liquide et le second fluide est une phase gazeuse.

Le réacteur de l'invention dispose d'un ballon tampon extérieur au réacteur associé au dispositif par des conduites et permettant l'échange de matière entre la phase liquide et la phase gazeuse, lesdites conduites permettant l'injection séparée dans le dispositif de mélange respectivement d'une phase essentiellement liquide contenant du gaz dissout et d'une phase essentiellement gazeuse contenant du liquide, lesdites phases essentiellement liquide et essentiellement gazeuse résultant de la mise en contact préalable des phases liquide et gazeuse dans ledit ballon tampon. Avantageusement, ledit ballon est disposé à l'amont de la tête du réacteur. Le réacteur décrit dans la présente invention peuvent être notamment utilisés dans des procédés d'hydrodésulfuration, d'hydrogénation sélective ou d'hydrodéazotation.

Par phase essentiellement gazeuse, il est entendu une phase contenant au moins 50% de gaz, de préférence au moins 70% de gaz et de manière encore plus préférée au moins 90% de gaz. Par phase essentiellement liquide, il est entendu une phase contenant au moins 50% de liquide, de préférence au moins 70% de liquide et de manière encore plus préférée au moins 90% de liquide.

D'autres avantages et caractéristiques de l'invention apparaîtront mieux à la lecture de la description donnée ci-après à titre d'exemple de réalisation.

La figure 1 schématise un réacteur sans ballon tampon.

La figure 2 schématise un exemple de réalisation du réacteur permettant d'inclure les dispositifs selon le présente invention.

Les figures 3 et 4 présentent deux exemples de réalisation d'un système de distribution placé préférentiellement en amont du premier lit et fonctionnant dans le réacteur précédemment décrit.

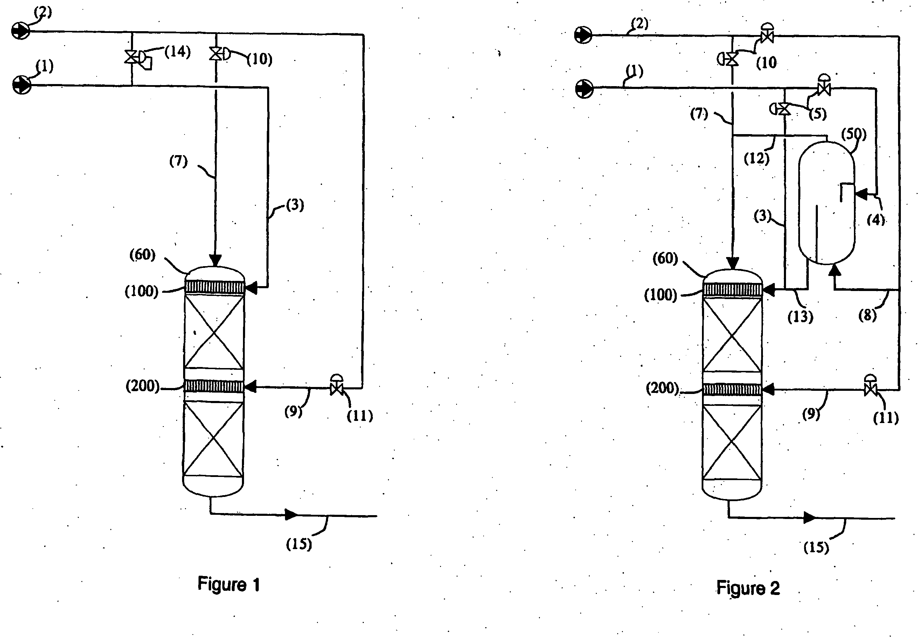

Selon un premier mode de réalisation du réacteur, un interne de distribution selon l'invention est placé en tête d'un réacteur à lit fixe fonctionnant en écoulement liquide seul ou liquide gaz co-courant descendant. Dans le cas où le réacteur fonctionne en écoulement liquide/gaz, la charge liquide et la charge gazeuse sont injectées de façon séparée dans l'interne de distribution situé en tête de réacteur et en amont du premier lit. Dans le cas où le réacteur comprend au moins deux lits, une fraction du gaz injecté dans le réacteur est injectée à un niveau intermédiaire du réacteur entre deux lits successifs à travers un système d'injection/distribution tel que ceux décrits dans la demande de brevet déposée par le demandeur le même jour que la présente demande. Ce premier schéma d'utilisation des internes de distribution est présenté sur la figure 1. Selon la présente invention un ballon est ajouté en association au système de distribution pour optimiser l'échange de matière entre la phase liquide et la phase gaz (voir figure 2). Ce ballon sera extérieur au réacteur et peut âtre favorablement placé à l'amont de la tête du réacteur. Dans ce mode de réalisation, la charge liquide et la charge gaz sont mises en contact par bullage dans ce ballon et ressortent séparément du ballon pour être injectées séparément dans le réacteur. Ce deuxième schéma d'utilisation des internes de distribution est illustré par la figure 2.

Le réacteur (60) schématisé sur la figure 1 est un réacteur à lit fixe à deux lits superposés qui fonctionne en écoulement descendant co-courant.

La charge liquide (1) est injectée à proximité de la tête du réacteur dans l'interne de distribution (100) à travers la ligne (3). La charge gazeuse (2) est injectée à deux niveaux en amont du réacteur (60) : en tête du réacteur par la ligne (7) et au niveau intermédiaire du réacteur par la ligne (9), à travers un interne de distribution (200) disposé entre les deux lits successifs. En cas de montée en pression dans la chambre liquide (100) et dans la ligne (3), un système de compensation de pression (14) (composé d'une vanne de régulation asservie à un capteur de pression différentiel) permet d'évacuer une partie du débit liquide vers la ligne (2) et la tête du réacteur. La répartition du débit gazeux injecté entre les lignes (7) et (9) est contrôlée à l'aide des vannes de régulation (10) et (11). Le débit gazeux injecté dans le réacteur (60) par la ligne (7) est habituellement compris entre 30 et 70 % molaire du débit molaire total du gaz injecté dans le réacteur (60), en (9) ce débit est compris entre 30 et 70 % molaire du débit molaire total du gaz injecté dans le réacteur (60). Après la réaction le produit est récupéré par la ligne (15).

Le réacteur (60) décrit dans la figure 2 est un réacteur à lit fixe à deux lits superposés qui fonctionne en écoulement descendant co-courant.

La charge liquide (1) est injectée en tête du réacteur. La charge gazeuse (2) est injectée à deux niveaux en amont du réacteur (60) : en tête du réacteur par la ligne (7) et au niveau intermédiaire du réacteur par la ligne (9), à travers un interne de distribution (200) disposé entre les deux lits successifs. Pour optimiser l'échange de matière entre la charge gazeuse et la charge liquide en amont du réacteur une fraction de la charge gazeuse injectée en tête est injectée à travers la ligne (8) et un ballon tampon (50). La répartition du débit gazeux injecté entre les lignes (7), (8) et (9) est contrôlée à l'aide des vannes de régulation (10) et (11). Le débit gazeux injecté dans le réacteur (60) par la ligne (7) est compris entre 0 et 70 % molaire du débit molaire gazeux total injecté dans le réacteur (60), le débit gazeux injecté par la ligne (8) est compris entre 0 et 70 % molaire du débit molaire gazeux total injecté dans le réacteur (60) et le débit gazeux injecté par la ligne (9) est compris entre 30 et 50 % molaire du débit molaire gazeux total injecté dans le réacteur (60). En sortie du ballon tampon (50) le gaz restant rejoint l'entrée du réacteur à travers la ligne (12) et (7). En entrée du réacteur, la charge liquide peut être directement injectée dans l'interne de distribution (100) situé en tête de réacteur à travers la ligne (3) ou être injectée, à travers la ligne (4), dans le ballon tampon (50) avant de rejoindre l'interne de distribution (100) à travers la ligne (13). La fraction du débit de charge liquide injecté dans le réacteur par la ligne (4) est compris entre 1 et 99 % massique du débit total liquide injecté dans le réacteur et la fraction du débit de charge liquide injecté dans le réacteur par la ligne (3) est compris entre 99 et 1 % massique du débit total liquide injecté dans le réacteur. La répartition du débit liquide injecté entre les lignes (3) et (4) est contrôlée à l'aide des vannes de régulation (5). Après la réaction le produit est récupéré par la ligne (15)

Les internes de distribution (100) placés à proximité de la tête du réacteur sont des dispositifs ou systèmes tels que revendiqués dans la présente invention et illustrés à titre d'exemple par les modes de réalisation décrits par la suite (figurés 3 et 4). Les internes de distribution situés à un niveau intermédiaire du réacteur (entre deux lits successifs) peuvent être choisis parmi tout dispositif de mélange et/ou de distribution connu de l'art antérieur. Avantageusement, les Systèmes de distribution intermédiaires peuvent être des dispositifs tels que décrits dans la demande de brevet déposée par le demandeur le même jour que la présente demande.

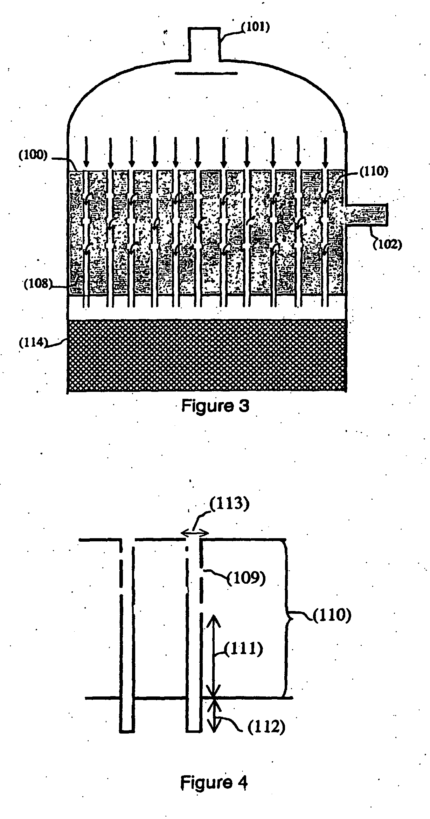

Un exemple de mode de réalisation du système de distribution placé en tête du réacteur en amont du premier lit est schématisé sur les figures 3 et 4. Selon ce mode de réalisation, du gaz est de préférence injecté dans le système mélangeur/distributeur axialement en tête du réacteur à travers des tubes perforés (108) qui traversent une chambre liquide (110). Cette chambre liquide est alimentée en au moins un point par l'injection de la charge liquide latéralement au réacteur par la ligne (102). Le principe de fonctionnement consiste à effectuer un pré-mélange des phases liquide et gaz dans les cheminées avant d'injecter ce mélange en différents points de l'entrée du lit (114). L'avantage de ce dispositif par rapport aux plateaux décrits dans l'art antérieur est de permettre à la fois un niveau liquide stable et constant en amont du présent système et d'offrir une grande flexibilité en débit liquide. Le niveau liquide au-dessus des cheminées ne dépend en effet pas selon la présente invention du débit liquide.

Dans le système de distribution décrit à la figure 3 et à la figure 4, le gaz est injecté dans une chambre de mélange en tête du réacteur par une entrée située sur l'axe (101) et circule à travers des tubes (108) disposés en parallèle qui traversent une chambre liquide (110). Cette chambre de liquide est alimentée par une entrée liquide latérale au réacteur (102). Les tubes (108) sont percés de plusieurs orifices (109) pour le passage du liquide. Enfin les tubes (108) seront prolongés d'une distance $h_t$ en dessous de la chambre liquide (110) afin d'éviter qu'une partie du liquide se propage sous la face externe de la chambre (110) et de diminuer l'espace compris entre le point d'injection du mélange et l'entrée dans le lit.

Dans le cas où cette chambre est alimentée directement par la ligne liquide (figure 1), une variation du débit liquide a pour conséquence une variation de la pression dans la chambre (110). Dans un cas de fonctionnement anormal où la pression atteint un seuil limite dans la chambre (110), un système de compensation de pression permet d'évacuer une partie du débit liquide vers la ligne (2) d'injection du gaz à travers la vanne (14) d'injection du gaz (figure 1). Le nombre et le diamètre des trous perforés sur les cheminées (108) est calculé selon des techniques bien connues de l'homme du métier de façon à ce que la chambre (110) soit en charge (c'est-à-dire remplie de liquide) pour le plus petit débit liquide. Ainsi la chambre (110) étant toujours en charge liquide, il n'y a pas de problème de niveau liquide fluctuant à l'amont des points d'injection du liquide. La distance entre deux niveaux de trous consécutifs est de préférence d'au moins 50 mm. Le diamètre des trous sera avantageusement inférieur à 75 % du diamètre d'une cheminée et habituellement supérieur à 2 mm. Le diamètre (113) de la cheminée (108) sera calculé de façon à ce qu'il n'y ait pas engorgement de la cheminée par toute technique connue de l'homme du métier, par exemple de façon à ce que la vitesse liquide en bas de cheminée ne soit pas supérieure à $0{,}35\sqrt{g\,d_c}$, où $d_c$ est le diamètre d'une cheminée est l'accélération due au champ de la pesanteur. La densité de cheminées au mètre carré sera de préférence prise au moins supérieure à 80 cheminées/m$^2$ et de façon plus préférée supérieure à 100 cheminées/m$^2$ pour assurer une répartition des points d'injection gaz-liquide en tête de lit catalytique. Cette densité sera en général comprise entre 100 et 700 cheminées/m$^2$ et de préférence comprise entre 150 et 500 cheminéés/m$^2$. La hauteur en dessous de l'orifice le plus bas (111) sera en général supérieure à 50 mm et pourra de préférence être comprise entre 50 et 300 mm. Cette hauteur a pour effet d'allonger le temps de séjour du mélange gaz-liquide dans la cheminée et donc d'optimiser le transfert de masse entre le gaz (H2 par exemple) et le liquide. Les cheminées du plateau jouent ainsi le rôle d'un mélangeur statique. Enfin les tubes (108) seront avantageusement prolongés d'une distance $h_t$ (112) en dessous de la chambre liquide (110) afin d'éviter qu'une partie du liquide se propage sous la face externe de la chambre (110) et de diminuer l'espace compris entre le point d'injection du mélange et l'entrée dans le lit. La distance $h_t$ sera de préférence comprise entre 10 et 50 mm. Ensuite afin d'éviter la séparation du mélange liquide-gaz avant son injection dans le lit, la distance entre le fond des tubes (108) et le haut du lit (114) sera de préférence comprise entre 0 et 50 mm, 0 exclu et de manière encore plus préférée entre 0 et 20 mm, 0 exclu.

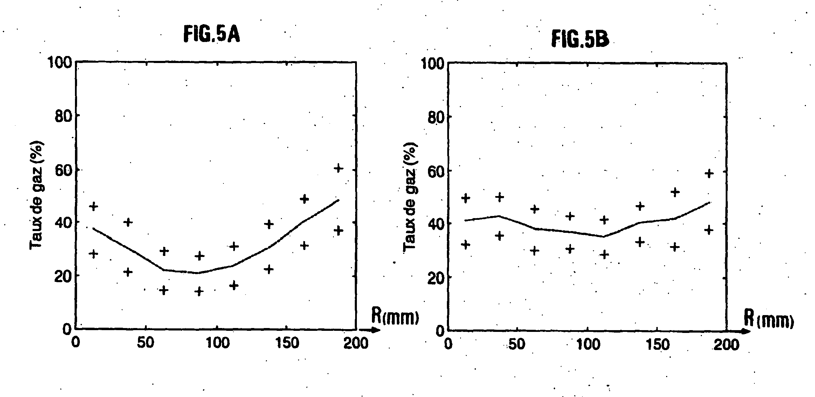

Un exemple de réalisation du système de distribution décrit à la figure 3 a été implanté sur un réacteur à lit fixe de diamètre 400 mm. La densité des cheminées est de 440 cheminées/m$^2$. Les cheminées ont un diamètre de 15 mm et sont perforées de 4 trous de diamètre 4 mm espacés de 50 mm. La distance h, des cheminées sous la chambre liquide est de 30 mm. La distance entre le fond des cheminées et l'entrée du lit est de 10 mm. La chambre liquide a une hauteur de 250 mm et est alimentée en un point. Les performances de ce système de distributions ont été testées en utilisant un système de tomographie gamma qui mesure la répartition des taux de présence liquide et gaz à l'intérieur du lit à une distance de 500 mm du système de distribution. Ces performances ont été comparées, dans les mêmes conditions de débits gaz et liquide, aux performances obtenues avec un système de distribution classique constitué de 4 cheminées de diamètre 50 mm pour le passage du gaz et de 44 trous de diamètre 10 mm pour le passage du liquide. Dans ce deuxième plateau le liquide et le gaz sont injectés de façon co-courante à l'amont du plateau en tête du réacteur. La figure 5 présente la répartition du taux de gaz dans le lit pour les deux systèmes considérés. Le système de distribution décrit dans la présente demande permet ainsi d'améliorer significativement la répartition de l'écoulement de gaz à l'intérieur du lit granulaire.

## Revendications

**1.** Réacteur comprenant

• au moins un dispositif permettant de réaliser le mélange entre un gaz et un liquide et la distribution dudit mélange ce dispositif comportant une chambre (110) alimentée par une phase essentiellement liquide, ladite chambre étant remplie de ce liquide, et une série de tubes ou cheminées (108) traversant la dite chambre selon une direction sensiblement verticale et alimentés par une phase essentiellement gazeuse , les dits tubes étant perforées par des orifices latéraux répartis sur plusieurs niveaux permettant la communication des dits tubes avec la dite chambre, les dits tubes ayant un diamètre de compris entre 3 et 100 mm pour la circulation de ladite phase essentiellement gazeuse avec une vitesse superficielle comprise entre 0,1 et 100 cm/s, la distance entre les orifices situés au niveau le plus bas par rapport au sens d'écoulement du fluide ou du mélange de fluide et la sortie du tube étant supérieure à 50 mm,
• au moins un lit de solides granulaires en aval du dit dispositif,
• un ballon tampon extérieur à l'enveloppe du réacteur pour la mise en contact préalable et l'échange de matière entre ledit gaz et ledit liquide, relié au dispositif par des conduites (12, 13) permettant l'injection séparée dans le dispositif de mélange respectivement de ladite phase essentiellement liquide contenant du gaz dissout et de ladite phase essentiellement gazeuse contenant du liquide.

**2.** Réacteur selon la revendication 1 dans lequel ledit mélange circule en écoulement co-courant descendant à travers le ou les dits lits de solides granulaires.

**3.** Réacteur selon la revendication 1 ou 2 dans lequel lesdits tubes (108) sont prolongés d'une distance ht au-dessous du niveau inférieur de la chambre (110), la distance ht étant comprise entre10 et 50mm.

**4.** Réacteur selonl'une des revendication 1 à 3 dans lequel la distance entre le niveau de sortie desdits tubes ( 108) et le niveau supérieur du lit situé au-dessous du dispositif est comprise entre 0 et 50mm.

**5.** Réacteur selon l'une des revendications 1 à 4 dans lequel la densité des tubes ou cheminées est supérieure à 80 cheminées par m$^2$.

**6.** Utilisation du réacteur décrit dans l'une quelconque des revendications précédentes dans un procédé d'hydrodésulfuration, d'hydrogénation sélective ou d'hydrodéazotation.

**Claims**

**1.** A reactor comprising

- At least a device for mixing a gas and a liquid and distributing said mixture, said device comprises a chamber (110) supplied with a essentially liquid phase, said chamber being filled with said liquid, and a series of tubes or conduits (108) traversing said chamber in a substantially vertical direction and supplied with a essentially gaseous phase, said tubes being perforated by lateral orifices distributed over a plurality of levels allowing said tubes to communicate with said chamber, said tubes being **characterized by** a diameter $d_c$ in the range 3 to 100 mm for a surface velocity of the essentially gaseous phase in the range 0.1 to 100 cm/s, said tubes also being **characterized in that** the distance between the orifices located at the lowest level with respect to the direction of flow of the fluid or fluid mixture at the tube outlet is more than 50 mm.
- At least a bed of granular solid located downstream of said device,
- A buffer drum located outside the envelope of reactor for the prior contact and material exchange between the liquid phase and the gas phase, connected with the device via lines (12, 13) to allow separate injection into the mixing device of an essentially liquid phase containing dissolved gas and of an essentially gaseous phase containing liquid respectively.

**2.** A reactor according to claim 1 in which the mixture circulate in a co-current dropper mode through said bed or beds of granular solids.

**3.** A reactor according to claim 1 or claim 2, in which the tubes (108) extend below the lower level of the chamber (110) by a distance $h_t$, distance $h_t$ preferably being in the range 10 to 50 mm.

**4.** A reactor according any one of claims 1 to 3, in which the distance between the level of the tube (108) outlet and the upper surface of the bed located below the device is preferably in the range 0 to 50 mm.

**5.** A reactor according to any one of claims 1 to 4, in which the density of the tubes or conduits is more than 80 conduits per m$^2$.

**6.** Use of a device and/or a reactor as described in any one of preceding claims, in hydrodesulphurisation, selective hydrogenation or hydrodeazotation processes.

**Patentansprüche**

**1.** Reaktor, umfassend

• mindestens eine Vorrichtung, die es ermöglicht, das Gemisch aus einem Gas und einer Flüssigkeit, und die Distribution des Gemischs zu realisieren, wobei diese Vorrichtung eine Kammer (110), die mit einer im Wesentlichen flüssigen Phase versorgt wird, wobei die Kammer mit dieser Flüssigkeit gefüllt ist, und eine Reihe von Rohren oder Schächten (108) umfasst, die die Kammer gemäß einer hauptsächlich vertikalen Richtung durchqueren, und die mit einer im Wesentlichen gasförmigen Phase versorgt werden, wobei die Rohre mit seitlichen Öffnungen perforiert sind, die über mehrere Ebenen verteilt sind, die die Kommunikation der Rohre mit der Kammer ermöglichen, wobei die Rohre einen Durchmesser im Bereich zwischen 3 und 100 mm aufweisen für die Zirkulation der im Wesentlichen gasförmigen Phase mit einer Oberflächengeschwindigkeit im Bereich zwischen 0,1 und 100 cm/s, wobei der Abstand zwischen den Öffnungen, die in der untersten Ebene, bezogen auf die Strömungsrichtung des Fluids oder des Fluidgemischs liegen, und dem Ausgang des Rohrs größer als 50 mm ist,
• mindestens ein Bett aus granulären Feststoffen stromabwärts der Vorrichtung,
• einen Pufferspeicher außerhalb der Hülle des Reaktors für das vorherige Inkontaktbringen und den Stoffaustausch zwischen dem Gas und der Flüssigkeit, der mit der Vorrichtung durch Leitungen (12, 13) verbunden ist, die die getrennte Injektion der im Wesentlichen flüssigen Phase, die das gelöste Gas enthält, und der im Wesentlichen gasförmigen Phase, die Flüssigkeit enthält, in die Vorrichtung zum Mischen ermöglicht.

**2.** Reaktor nach Anspruch 1, wobei das Gemisch in absteigendem Gleichstrom durch das oder die Betten aus granulären Feststoffen zirkuliert.

**3.** Reaktor nach Anspruch 1 oder 2, wobei die Rohre (108) um einen Abstand ht unter der unteren Ebene der Kammer (110) verlängert sind, wobei der Abstand ht im Bereich zwischen 10 und 50 mm liegt.

**4.** Reaktor nach einem der Ansprüche 1 bis 3, wobei der Abstand zwischen der Ebene des Ausgangs der Rohre (108) und der oberen Ebene des Betts, das unter der Vorrichtung liegt, im Bereich zwischen 0 und 50 mm liegt.

**5.** Reaktor nach einem der Ansprüche 1 bis 4, wobei die Dichte der Rohre oder Schächte mehr als 80 Schächte pro m$^2$ beträgt.

**6.** Verwendung des Reaktors, der in einem der vorhergehenden Ansprüche beschrieben ist, in einem Verfahren zur Hydroentschwefelung, zur selektiven Hydrierung oder zur Hydrodenitrogenierung.

Figure 1

Figure 2

EP 1 180 393 B1

8

Figure 3

Figure 4

FIG.5B

FIG.5A

**RÉFÉRENCES CITÉES DANS LA DESCRIPTION**

**Documents brevets cités dans la description**

- FR 2745202
- US 5688445 A
- WO 9535159 A
- US 4140625 A
- FR 2740054 A